Europäisches Patentamt

European Patent Office

Office européen des brevets

(19)

(11) **EP 0 696 751 B1**

(12) **EUROPEAN PATENT SPECIFICATION**

(45) Date of publication and mention
of the grant of the patent:
**17.03.1999 Bulletin 1999/11**

(51) Int Cl.⁶: **G02B 7/10**, H04N 5/225

(21) Application number: **94305968.3**

(22) Date of filing: **12.08.1994**

(54) **Monitoring camera**

Überwachungskamera

Caméra de surveillance

(84) Designated Contracting States:
**DE GB LU**

(43) Date of publication of application:
**14.02.1996 Bulletin 1996/07**

(73) Proprietor: **AMANO & ASSOCIATES
INCORPORATED
Minato-ku, Tokyo (JP)**

(72) Inventor: **Amano, Hiro
Kisarazu-shi, Chiba-ken (JP)**

(56) References cited:
EP-A- 0 540 307          GB-A- 2 203 312
GB-A- 2 267 762          US-A- 4 432 286

- PATENT ABSTRACTS OF JAPAN vol. 17, no. 428
  (P-1588) 9 August 1993 & JP-A-05 088 094
  (AMANO HIROSHI ET AL.) 9 April 1993
- PATENT ABSTRACTS OF JAPAN vol. 10, no. 190
  (P-474) 4 July 1986 & JP-A-61 036 730 (HOKUBU
  TSUSHIN KOGYO KK) 21 February 1986

## Description

The present invention relates to a monitoring camera for monitoring through an opening in a wall, and more particularly, but not exclusively, to a monitoring camera for monitoring various conditions including the grain size and distribution of raw material, gas flow and the like in the throat of a blast furnace for producing pig iron from iron ore.

Generally, a blast furnace for producing iron from iron ore has a downwardly tapering bosh in its lower portion and a cylindrical shaft extending upwardly from the bosh into an upwardly tapering throat having a central inlet which opens upwardly. The throat is connected to a gas retriever disposed on the top of the throat. As iron ore and coke charged from the throat descend in the shaft, they are reduced and melted by a reducing gas which is produced at high temperature in the bosh, and separated into slag and pig iron.

The iron ore and the coke are charged into the shaft in a predetermined planned stack pattern such that those of a predetermined grain size are placed in position in the shaft so as to form a conical recess with a lowest centre in the throat. A stack pattern suitable for the production of pig iron is selected depending on the blast furnace used.

To form the predetermined stack pattern, the iron ore and the coke are charged into the shaft according to a prescribed charging pattern by a charging device such as a swingable chute disposed above the throat or a bell or the like which is vertically movable. However, it is difficult to keep the stack pattern as planned because the iron ore and the coke which are charged roll toward the centre of the conical recess and the reducing gas blows upwardly from around the iron ore and the coke.

A furnace throat monitoring camera may be installed to monitor the grain and distribution of the iron ore and the coke in the throat of the blast furnace and the reducing gas blowup. If an undesirable change occurs in the grain and distribution of the iron ore and the coke in the throat or a blowup of the reducing gas is produced, then the furnace throat monitoring camera can accurately detect the position of such an undesirable change or a blowup. Iron ore and coke can then be charged into the detected position by the charging device, allowing the stack pattern to be easily maintained.

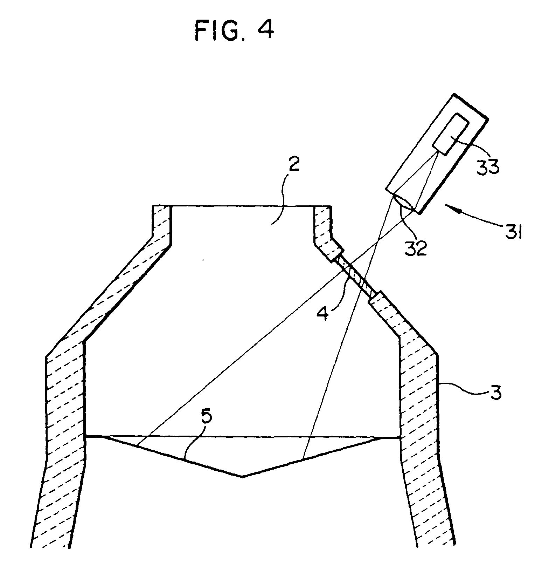

FIG. 4 of the accompanying drawings shows a conventional furnace throat monitoring camera 31 for monitoring conditions of a stack pattern 5 in a throat 2 through an opening 4 defined in a surrounding wall 3 of the throat 2. The furnace throat monitoring camera 31 comprises a lens system 32 and an imaging device 33 which are positioned behind the opening 4.

The furnace throat monitoring camera 31 shown in FIG. 4 is required to be spaced a considerable distance behind the opening 4 in order to gain a wide field of view. However, it has heretofore been unable for the furnace throat monitoring camera 31 to image a sufficient area of the stack pattern 5 within its field of view. If the opening 4 is increased in size in order to widen the optical path of the lens system 32, then the surface of a shielding glass panel installed behind the opening 4 or the surface of the lens system 32 tends to be smeared by particles of the iron ore and the coke which are stirred upwardly by the reducing gas in the throat 2, thereby preventing the furnace throat monitoring camera 31 from monitoring the interior of the throat 2 clearly at all times.

To solve the above problem, there has been proposed a furnace throat monitoring camera 41 shown in FIG. 5 of the accompanying drawings as disclosed in Japanese laid-open patent publication No. 5-88094.

The furnace throat monitoring camera 41 monitors a stack pattern 5 in a throat 2 through an opening 4 which is composed of a small hole defined in a surrounding wall 3 of the throat 2. The furnace throat monitoring camera 41 comprises a wide-angle lens system 42 of short focus and an imaging device 43 which are disposed behind the opening 4. The opening 4 is positioned on a front focal point on the optical axis of the wide-angle lens system 42.

The furnace throat monitoring camera 41 can image almost an entire area of the stack pattern 5 within its field of view because of the wide-angle lens system 42. Since the wide-angle lens system 42 has a short focal length and can be positioned closely behind the opening 4, the overall size of the furnace throat monitoring camera 41 may be reduced.

The opening 4 is located on the front focal point where light having passed through compound lenses of the wide-angle lens system 42 is converged. Therefore, even though the opening 4 is composed of a small hole, it can maintain a sufficient optical path of the wide-angle lens system 42. The small hole is effective to prevent particles in the throat 2 from finding their way into the furnace throat monitoring camera 41, making it less liable for such particles to smear the wide-angle lens system 42. Therefore, the furnace throat monitoring camera 41 can monitor the interior of the throat 2 clearly at all times, and can be supervised and serviced with ease.

The field of view of the furnace throat monitoring camera 41 is illuminated by an illuminating unit 44 which is disposed above the surrounding wall 3.

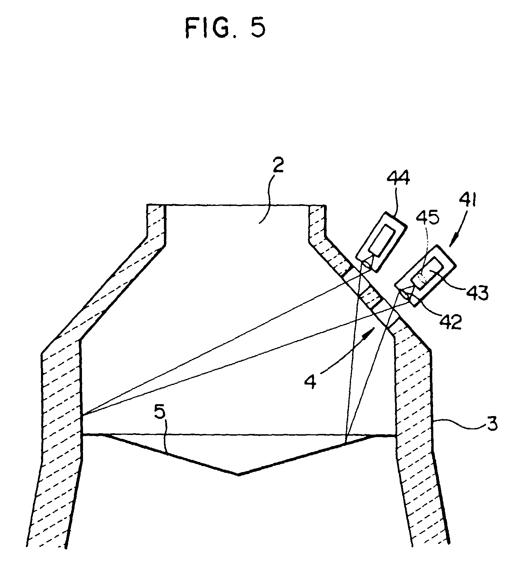

For analyzing the charging pattern for the iron ore and the coke to keep the stack pattern 5 optimum or to make the stack pattern 4 more preferable, it is necessary to monitor the stack pattern 5 in a wide range and also to recognize partial details of the grain size and distribution of the iron ore and the coke and the blowup of the reducing gas. To meet such a requirement, a zoom lens system 45, indicated by the imaginary line in FIG. 5, may be positioned behind the wide-angle lens system 42 on the same optical axis for movement in unison with the wide-angle lens system 42, so that an image produced by the wide-angle lens system 42 can be observed at an enlarged scale by the zoom lens system 45.

However, inasmuch as the small hole 4, the wide-angle lens system 42 and the zoom lens system 45 are aligned on the same optical axis, the zoom lens system 45 is capable of increasing or reducing only the size of an image around the optical axis, but not the size of an image around any desired position on an image produced by the wide-angle lens system 42.

The inventors have now realised that the fact that the zoom lens system 45 is unable to enlarge the peripheral field edge of an image produced by the wide-angle lens system 42 is a practical defect, i.e. the furnace throat monitoring camera 41, with the zoom lens system 45, can monitor only a central area of the stack pattern 5, but not details of the grain size, the distribution of the iron ore and the coke and the blowup of the reducing gas outside of the central area of the stack pattern 5.

According to one aspect, there is provided a monitoring camera for monitoring conditions through an opening in a wall, the camera comprising a wide-angle lens system for producing an optical image, a zoom lens system for varying the size of the optical image produced by the wide-angle lens system and an imaging device for capturing the optical image produced by the zoom lens system, wherein the zoom lens system is arranged to observe a portion of the image produced by the wide-angle lens system and moving means are provided for varying that portion of the image which is observed by the zoom lens system; further comprising

a cylindrical attachment having one end for surrounding said opening and an outer sleeve, said wide-angle lens system, said zoom lens system and said imaging device being housed in said outer sleeve, said outer sleeve being fitted in an opposite end of said cylindrical attachment; and
an inert gas supply means for introducing an inert gas into said cylindrical attachment and discharging at least part of said inert gas through said opening;

characterised in that:

said cylindrical attachment has a partition dividing an interior space thereof into a first space defined between said opening and said partition and a second space defined between said partition and said outer sleeve, said partition having an optical path for said wide-angle lens system and said zoom lens system, said inert gas supply means comprising means for introducing the inert gas under a higher pressure into said first space and then discharging the inert gas through said opening, and passing the inert gas under a lower pressure through said second space.

It will thus be seen that such a camera can be so designed as to be capable of imaging a wide range in an optical field of view thereof and of enlarging and contracting an image around any desired position over the optical field of view in its entirety, and which allows a stack pattern to be maintained easily and a charging pattern to be analyzed easily of iron ore and coke that are charged into the throat of a blast furnace for producing pig iron from iron ore.

One embodiment of the present invention has moving means for moving the zoom lens system and the imaging device in unison with each other to observe any area of the optical image produced by the wide-angle lens system. In such a case, an overall optical image of the side of the wall, which is produced by the wide-angle lens system, is observed through the imaging device. If there is any particular area of the optical image which is to be observed in greater detail, then the zoom lens system and the imaging device are moved by the moving means, and an enlarged optical image of that area is produced by the zoom lens system for detailed observation of the area.

Such moving means may be designed to move the zoom lens system and the imaging device to orient an optical axis of the zoom lens system in any direction around an optical axis of the wide-angle lens system for allowing the observer to easily perceive an area to be observed. The moving means may move the zoom lens system and the imaging device vertically and horizontally parallel to the optical axis of the wide-angle lens system, or may tilt the zoom lens system and the imaging device in any direction to orient the orientation of the optical axis of the zoom lens system in any direction around the optical axis of the wide-angle lens system.

In the preferred embodiment, the opening is positioned forwardly of a front focal point of the wide-angle lens system within a range whose length corresponds to a minimum width of the opening to obtain a clear image. If the distance between the opening and the wide-angle lens system is shorter than the front focal length of the wide-angle lens system, then the field of view is narrowed. If the distance between the opening and the wide-angle lens system is longer than the sum of the front focal length of the wide-angle lens system and the minimum width of the opening, then the produced image is blurred. If a shielding glass panel (described below) is present on the optical axis of the wide-angle lens system, then the front focal length of the wide-angle lens system is corrected by adding the product of the thickness of the shielding glass panel and the refractive index thereof.

When the opening is positioned as described above, incident light to be applied to the wide-angle lens system is converged in the opening or in a position in front of the opening. Therefore, the opening may be a small hole large enough to provide an optical path for the incident light to be applied to the wide-angle lens system, and does not need to be unduly large. The opening in the form of a small hole is effective to reduce particles entering the monitoring camera, and is highly advantageous when the monitoring camera is used to monitor an area where many particles are produced, such as the throat of a blast furnace.

Since the small hole serves as an aperture for the wide-angle lens system, any image produced by the wide-angle lens system is sharp. To allow the small hole to function as an aperture, the opening as the small hole may be positioned such that when the wide-angle lens system suffers small aberrations, the distance from the wide-angle lens system is slightly longer than the front focal length thereof, and when the wide-angle lens system suffers large aberrations, the distance from the wide-angle lens system is slightly shorter than the sum of the front focal length thereof and the minimum width of the opening, i.e., the diameter of the small hole.

The zoom lens system is preferably combined with a close-up lens having a short focal length. If a sharply focused image were to be formed on the back focal point of the wide-angle lens system by the zoom lens system, then the closest imaging distance of the zoom lens system would have to be provided in front of the zoom lens system, resulting an unduly long device configuration. The close-up lens disposed in front of the zoom lens system converts rays of light into parallel rays of light which are then applied to the zoom lens system. Accordingly, the closest imaging distance of the zoom lens system may be shortened, thus reducing the size of the monitoring camera.

Preferably, the monitoring camera includes illuminating means for illuminating the side of the wall.

The monitoring camera includes a cylindrical attachment having one end surrounding the opening, and an outer sleeve, the wide-angle lens system, the zoom lens system, and the imaging device being housed in the outer sleeve, the outer sleeve being fitted in an opposite end of the cylindrical attachment closely to the wide-angle lens system. Since the wide-angle lens system, the zoom lens system, and the imaging device are housed altogether in the outer sleeve, they can be serviced with ease. Preferably, a shielding glass panel is mounted on an end of the outer sleeve near the cylindrical attachment or an end of the cylindrical attachment near the outer sleeve, for isolating the wide-angle lens system, the zoom lens system, and the imaging device from a space outside of the outer sleeve thereby to prevent them from being smeared with particles.

Desirably, the wide-angle lens system has an angle of view ranging from 60° to 80° and the zoom lens system has a zoom ratio ranging from 4 to 15.

The monitoring camera may be designed to be suitable for use in combination with a blast furnace for producing pig iron from iron ore, for observing a throat of the blast furnace through an opening defined in a surrounding wall of the throat. When the throat of the blast furnace is observed by the monitoring camera, an optical image of the entire throat can be obtained by the wide-angle lens system. If the observed optical image contains an improper stack pattern of charged materials or a blowup of a reducing gas, then the zoom lens system and the imaging device are moved by the moving means to orient the optical axis of the zoom lens toward an area which is to be obtained in greater detail. Since the zoom lens system produces an enlarged optical image of the area to be obtained in greater detail, the area can be observed in greater detail by the observer to perceive the stack pattern representing the grain size and distribution of iron ore and coke in the throat and also the reducing gas blowup.

The monitoring camera has an inert gas supply means for introducing an inert gas into the cylindrical attachment and discharging at least part of the inert gas through the opening into the throat. This is because the throat of the blast furnace is filled with particles of the iron ore and coke which are stirred by gas flows. If such particles entered the monitoring camera through the opening, they would be deposited on the shielding glass panel, presenting an obstacle to the monitoring of the throat.

The entry of particles from the throat into the monitoring camera is reduced by the opening which is in the form of a small hole as described above. However, very fine particles still tend to flow from the opening into the monitoring camera, smearing the shielding glass panel. The inert gas flow from the opening into the throat is capable of preventing such very fine particles from entering the monitoring camera.

The cylindrical attachment has a partition dividing an interior space thereof into a first space defined between the opening and the partition and a second space defined between the partition and the outer sleeve, the partition having an optical path for the wide-angle lens system and the zoom lens system, the insert gas supply means comprising means for introducing the insert gas under a higher pressure into the first space and then discharging the inert gas through the opening into the throat, and passing the insert gas under a lower pressure through the second space. The inert gas introduced under a higher pressure is effective to prevent the very fine particles from entering the monitoring camera, thus preventing the optical path in the partition from being smeared. The second space filled with the inert gas under a lower pressure serves as a thermal buffer zone for thereby preventing the shielding glass panel and the optical path in the partition from being frosted by the heat of the particles. The inert gas under a lower pressure or the thermal buffer zone is also effective in preventing particles from entering the outer sleeve even when the shielding glass panel is broken.

The monitoring camera may include shutter means for selectively opening and closing the opening.

When the partition is broken, the shutter means is closed to prevent the monitoring camera from being damaged by particles which would otherwise enter the camera. The shutter means has an optical path for the wide-angle lens system and the zoom lens system to prevent particles from entering the monitoring cameras without obstructing the visual observation of the throat.

Reference will now be made, by way of example only, to the accompanying drawings in which:-

FIG. 1 is a schematic cross-sectional view of a monitoring camera embodying the invention in use on a furnace throat;

FIG. 2 is an enlarged cross-sectional view of the monitoring camera shown in FIG. 1;

FIG. 3 is an enlarged cross-sectional view showing the positional relationship between an opening and a wide-angle lens system of the monitoring camera shown in FIG. 1;

FIG. 4 is a cross-sectional view of a conventional monitoring camera for use on a furnace throat; and

FIG. 5 is a cross-sectional view of further conventional monitoring camera.

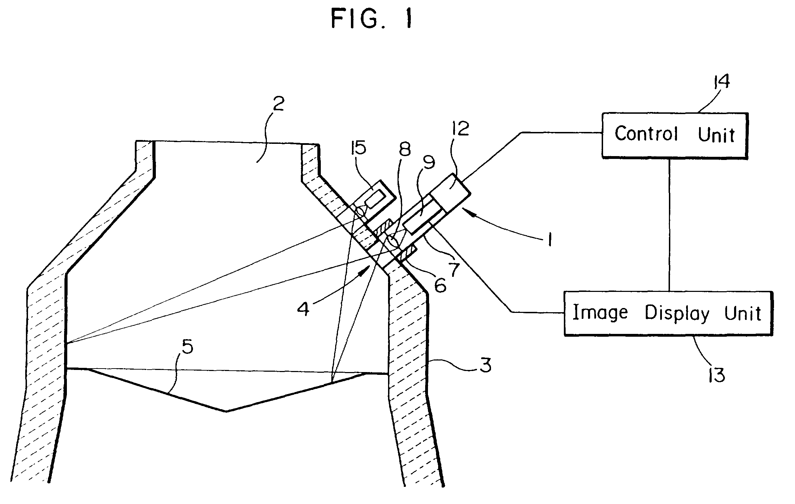

As shown in FIG. 1, a monitoring camera 1 embodying the present invention serves to monitor a stack pattern 5 in a throat 2 of a blast furnace through an opening 4 which is defined in a surrounding wall of the throat 2. The monitoring camera 1 includes a cylindrical attachment 6 mounted on an outer surface of the surrounding wall 3, the cylindrical attachment 6 having one end surrounding the opening 4. The camera 1 also has an outer sleeve 7 housing a side-angle lens system 8 fixedly therein and having an end fitted in the other end of the cylindrical attachment 6. Therefore, the wide-angle lens system 8 is fixed in confronting relation to the surrounding wall 3.

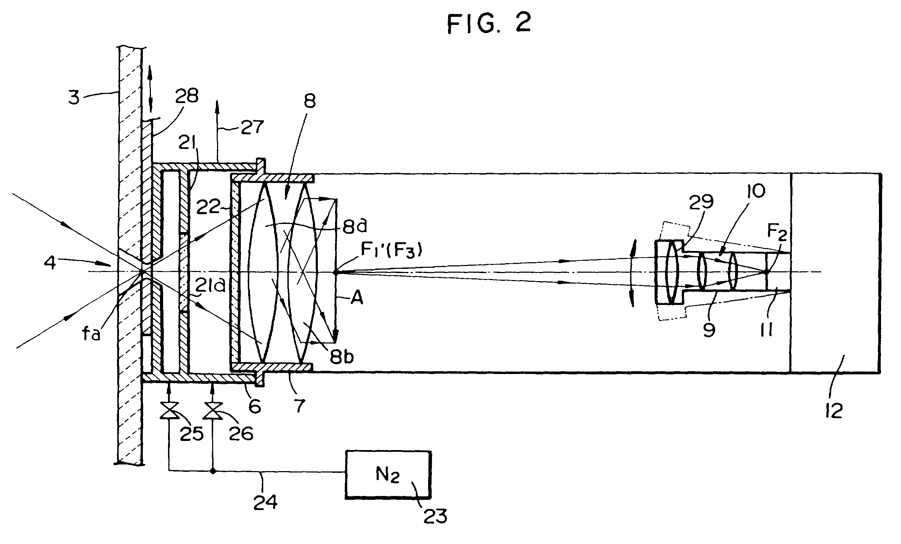

A lens barrel 9 is housed in the outer sleeve 7. As shown in FIG. 2, the lens barrel 9 accommodates a zoom lens system 10, an imaging device 11, disposed behind the zoom lens system 10, and a close-up lens 29, disposed in front of the zoom lens system 10.

Normally, the zoom lens system 10 is held on the same optical axis as the wide-angle lens system 8, so that the imaging device 11 can detect an optical image, typically of the stack pattern 5 in the throat 2, produced by the wide-angle lens system 8 through the zoom lens system 10. The lens barrel 9 can be angularly moved by a tilting unit 12 to tilt the zoom lens system 10 in unison with the imaging device 11 for observing any area of the optical image produced by the wide-angle lens system 8.

Specifically, as indicated by the imaginary lines in FIG. 2, the tilting unit 12 can pan the lens barrel 9 to orient the optical axis of the zoom lens system 10 in any direction around the optical axis of the wide-angle lens system 8. In FIG. 2, the lens barrel 9 is shown as being panned about its rear end. However, the lens barrel 9 may be panned in any manner not shown in FIG. 2 insofar as the optical axis of the zoom lens system 10 can be oriented in any direction around the optical axis of the wide-angle lens system 8.

As shown in FIG. 1, monitoring camera 1 is electrically connected to an image display unit 13 and a control unit 14 which is electrically connected to the tilting unit 12. An optical image produced through the wide-angle lens system 8 and the zoom lens system 10 is converted by the imaging device 11 into an electric signal, which is then displayed as a visible image on the display screen of the image display unit 13. The operator of the furnace throat monitoring camera 1 can controls the control unit 14 to actuate the tilting unit 12 while viewing the image of the stack pattern 5 displayed on the display screen of the image display unit 13.

The field of view of the furnace throat monitoring camera 1 can be illuminated by an illuminating unit 15 disposed on the surrounding wall 3 above the camera 1. As shown in FIG. 2, the cylindrical attachment 6 has a partition 21 extending across the space therein and isolating the interior space of the outer sleeve 7 from the atmosphere in the throat 2 through the opening 4. The partition 21 has a central shielding glass panel 21a fitted therein which serves as an optical path for the wide-angle lens system 8 and the zoom lens system 10. The central shielding glass panel 21a has a thickness of 0.8 cm. The outer sleeve 7 also has a shielding glass panel 22 fitted in an end thereof near the cylindrical attachment 6, the shielding glass panel 22 having a thickness of 1.0 cm. The shielding glass panel 22 may alternatively be positioned closely to the end of the outer sleeve 7 near the cylindrical attachment 6.

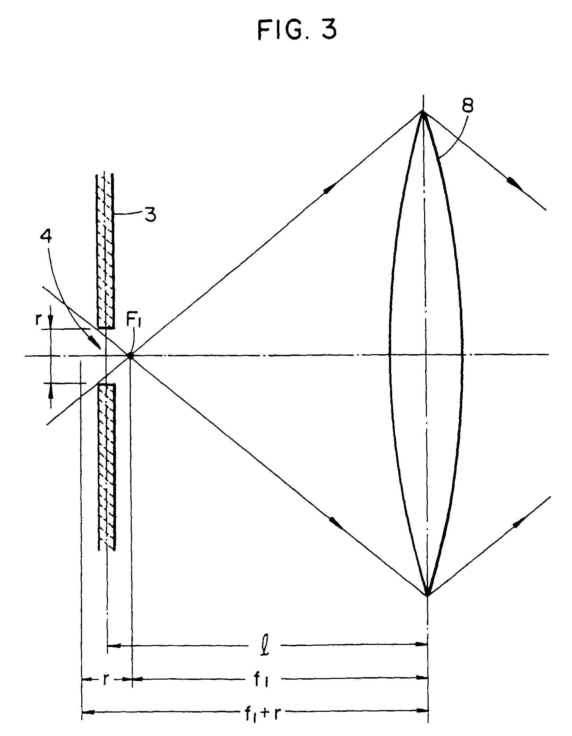

The wide-angle lens system 8 is fixedly disposed in the outer sleeve 7 behind the shielding glass panel 22. As shown in FIG. 3, the opening 4 is positioned forwardly of a front focal point $F_1$ of the wide-angle lens system 8 within a range whose length corresponds to a minimum width "r" of the opening 4. The opening 4 is in the form of a small hole which is large enough to provide an optical path for incident light that is converged on the front focal point $F_1$. The distance "$l$" between the centre of the opening 4 and the centre of the wide-angle lens system 8 lies in the following range:

$$f_1 \leq l < f_1 + r$$

where r is the minimum width of the opening 4, i.e., the diameter of the small hole as the opening 4, and $f_1$ the front focal distance from the centre of the wide-angle lens system 8 to the front focal point $F_1$ thereof.

Since the shielding glass panels 21a, 22 are positioned on the optical axis of the wide-angle lens system 8, the front focal distance $f_1$ should preferably be corrected optically by adding the product of the thicknesses of the shielding glass panels 21a, 22, i.e., 0.8 cm and 1.0 cm, respectively, and the refractive index thereof to the front focal distance $f_1$.

In this embodiment, the wide-angle lens system 8 is composed of plural lenses combined to have an aperture of 150 mm, a front focal length of 9 cm, and a back focal length of 9 cm, the lenses being fixed to the outer sleeve 7, and the distance "l" is the same as the front focal distance $f_1$ of the wide-angle lens system 8, i.e., the distance "l" is 9 cm. While the wide-angle lens system 8 actually comprises a number of lenses to eliminate aberrations, the wide-angle lens system 8 is shown as being composed of two lenses 8a, 8b for illustrative purposes.

The angle of view of the wide-angle lens 8 as it views the throat 2 through the opening 4 is about 80°.

The zoom lens system 10 is spaced 28 cm behind the wide-angle lens system 8. The imaging device 11 is positioned on the back focal point $F_2$ of the zoom lens system 10. The focal length of the zoom lens system 10 is variable from 0.8 to 8 cm. The zoom lens system 10 has a zoom ratio of 8, a maximum angle of view of 43.6°, a minimum angle of view of 4.6°, and a closest imaging distance of 1.2 m. The closest imaging distance is a smallest distance at which a subject can be focused on the back focal point $F_2$ of the zoom lens system 10. No clear image would be produced by the zoom lens system 10 unless the length of the lens barrel 9 would be at least the closest imaging distance. In the illustrated monitoring camera 1, the closest imaging distance of the zoom lens system 10 is shortened by the close-up lens 29 having a focal length of 18.8 cm which is positioned in front of the zoom lens system 10.

The close-up lens 29 converts rays of light from a front focal point $F_3$ thereof into parallel rays of light, which enter the zoom lens system 10. Therefore, even though the subject is positioned at a distance smaller than the closest imaging distance of the zoom lens system 10, it can be viewed as being located at a greater distance, as shown in FIG. 2. Therefore, the close-up lens 29 allows the zoom lens system 10 having a closest imaging distance of 1.2 m to function as a zoom lens system having a smaller closest imaging distance, so that the outer sleeve 7 can be shorter than would otherwise be.

A nitrogen gas supplied from an external high-pressure nitrogen gas source 23 through a conduit 24 is depressurized by a valve 25 in the conduit 24, introduced into a space in the cylindrical attachment 6 between the opening 4 and the partition 21, and discharged into the throat 2 through the opening 4. The nitrogen gas as it is discharged into the throat 2 through the opening 4 prevents the atmosphere in the throat 2 from entering the cylindrical attachment 6 for thereby protecting the inside of the furnace throat monitoring camera 1, particularly the shielding glass panel 21a, against being smeared by particles of the iron ore and the coke which are stirred up by the reducing gas flow in the throat 2. The conduit 24 is branched off at a position upstream of the valve 25 and connected to a valve 26 which depressurizes the nitrogen gas to a pressure lower than the nitrogen gas introduced into the space in the cylindrical attachment 6 between the opening 4 and the partition 21 and higher than the atmospheric pressure. The nitrogen gas depressurized by the valve 26 is introduced into a space in the cylindrical attachment 6 between the partition 21 and the shielding gas panel 22. The space thus filled with the nitrogen gas serves as a thermal buffer zone between the space between the opening 4 and the partition 21 and the outer sleeve 7, for thereby preventing the shielding glass panels 21a, 22 from being frosted by the heat of the particles from the throat 2. The thermal buffer zone is also effective in preventing particles from entering the outer sleeve 7 even when the shielding glass panel 21a is broken. The nitrogen gas is discharged from the space between the partition 21 and the shielding glass panel 22 through a discharge pipe 27.

When the shielding glass panel 21a is broken, the shielding glass panel 22 protects the mechanism in the outer sleeve 7. When the shielding glass panel 21a is broken, the pressure in the exhaust pipe 27 is increased. Such an increase in the pressure in the exhaust pipe 27 is detected, causing a cylinder (not shown) to move a slidable shutter 28 between the cylindrical attachment 6 and the surrounding wall 3 for thereby closing the opening 4 to protect the internal mechanism of the furnace throat monitoring camera 1. The shutter 28 has a hole which is held in registry with the opening 4 under normal conditions for maintaining the optical path for the wide-angle lens system 8 and the zoom lens system 10 and permitting the nitrogen gas to flow through the opening 4 into the throat 2.

Normally, the angle of view of the wide-angle lens system 8 as it views the throat 2 through the opening 4 is about 80°, so that a semicircular or greater range in the throat 2 spaced 10 m forwardly from the wide-angle lens system 8 can be observed. Since the diameter of the semicircular or greater range is:

$$(10\tan 40°) \times 2 = 16.8 \ (m),$$

it is assumed that an object having a size of about 16.8 m will be observed by the camera 1. Since the object is sufficiently spaced from the wide-angle lens system 8, the wide-angle lens system 8 focuses an inverted real image A on a back focal point $F_1'$ thereof which is spaced about 9 cm behind the wide-angle lens system 8.

The size of the real image A is determined from the ratio of the back focal length of the wide-angle lens system 8 to the distance to the object as follows:

$$16.8 \ (m) \times 9 \ (cm)/10(m) = 15.1 \ (cm) .$$

Since the zoom lens system 10 normally has an angle of view of 43.6° and also has the same optical axis as the wide-angle lens system 8, the real image A can be observed by the zoom lens system 10 through the close-up lens 29. At this time, the zoom lens system 10 is positioned 28 cm behind the wide-angle lens system 8, and the real image A is positioned within the closest imaging distance of the zoom lens system 10. With the close-up lens 29 being positioned such that the real image A is focused on the front focal point $F_3$ of the close-up lens 29, the rays of light from the real image A are converted by the close-up lens 29 into parallel rays of light which are applied to the zoom lens system 10. Therefore, the real image A is observed as if it were positioned outside of the closest imaging distance of the zoom lens system 10. As a result, a clear image (not shown) of the real image A produced by the zoom lens system 10 is focused on the imaging device 11, and the full image of the range having a diameter of 16.8 m in the throat 2 is displayed entirely on the display screen of the image display unit 13.

The image display unit 13 has 510 display lines. Consequently, an actual length displayed per display line is:

$$16.8 \ (m)/510 = 33 \ (mm).$$

Usually, the human eye can recognize an object corresponding to two display lines on the image display unit 13 with 510 display lines, and can perceive an object having a size of about 66 mm or greater in the throat 2 on the display screen that is 10 m spaced from the throat 2.

For observing an enlarged image of a desired area in the throat 2, the zoom lens system 10 and the imaging device 11 are oriented in a corresponding direction by the tilting unit 12, and the angle of view of the zoom lens 10 is varied.

For example, if the angle of view of the zoom lens 10 is set to 4.6°, the zoom ratio becomes 10, and an area having a size of 1.51 cm, which is about 1/10 of the size of 15.1 cm of the inverted real image A, in the angle of view of about 80° of the wide-angle lens system 8 as it views the throat 2 through the opening 4 is enlarged and displayed entirely on the display screen of the image display unit 13. The displayed area is an area having a diameter of 1.68 m in the throat 2, and corresponds to an angle of view of about 8° as the wide-angle lens system 8 views the throat 2 through the opening 4.

At this time, an actual length displayed per display line is:

$$1.68 \ (m)/510 = 3.3 \ (mm).$$

The observer can recognize an object having a size of about 7 mm in the throat 2 on the display screen which is spaced 10 m apart.

A zoom lens system with a fixed optical axis in line with the opening 4 and the wide-angle lens system 8 would enlarge a central area, which is 1/100 of the entire area, of the inverted real image A around the optical axis. However, the zoom lens system 10 according to this embodiment can enlarge the remaining area, which is 99/100 of the entire area, of the inverted real image A around the optical axis because the zoom lens system 10 and the imaging device 11 can be tilted so as to be oriented in a desired direction by the tilting unit 12.

The angle through which the zoom lens system 10 and the imaging device 11 can be tilted may be an angle through which the inverted real image A having a size of 15.1 cm is viewed from the imaging device 11. Since the distance between the imaging device 11 and the inverted real image A is about 21 cm, the angle is given as:

$$(\tan^{-1} 7.5/21) \times 2 = 39.5.$$

The zoom lens system 10 and the imaging device 11 are thus tilted so as to orient the optical axis of the zoom lens system 10 in any desired direction within a conical space in which the inverted real image A having a size of 15.1 cm is viewed from the imaging device 11. A detector may be mounted on the lens barrel 9 for detecting two signals representing coordinates (x, y) of the lens barrel 9 within an x-y orthogonal coordinate system lying perpendicularly to the optical axis of the wide-angle lens system 8, the x-y orthogonal coordinate system having an origin on the optical axis of the wide-angle lens system 8. When the zoom lens system 10 and the imaging device 11 are tilted in any desired direction by the tilting unit 12, the signals from the detector are read to determine the direction and angle of titling movement of the zoom lens system 10 and the imaging device 11 toward the coordinates (x, y). Alternatively, signals indicative of an angle and a radial distance from the optical axis of the wide-angle lens system 8 in a circular coordinate system around the optical axis of the wide-angle lens system 8 may be detected from the detector to determine the direction and angle of titling movement of the zoom lens system 10 and the imaging device 11 when they are tilted by the tilting unit 12.

When the zoom lens system 10 and the imaging device 11 are tilted by the tilting unit 12, the observer often tends to fail to recognize which area in the throat 2 is being observed on the display screen of the image display unit 13. To avoid such a drawback, the signals from the above detector may be converted into a value used generally in the operation of blast furnaces, e.g., an angle in a circumferential direction with respect to a hot air main pipe as a reference, or a distance from the centre of the blast furnace, and the converted value may be superimposed together with the zoom ratio on the display screen of the image display unit 13.

The converted value is calculated from the two signals detected by the detector based on the height of the imaging device 11 from a height reference of the blast furnace, the height of a struck line of a charged material from the angle at which the imaging device 11 is installed, the angle of rest of the charging material, and the radius of the blast furnace. The inverted real image A contains optical aberrations as it is produced by the wide-angle lens system 8. Such optical aberrations are relatively small at the centre of the image, but reach 20% in the peripheral edge of the image. Therefore, the position in the furnace and the image position are calculated while correcting the optical aberrations.

In the above embodiment, the zoom lens system 10 and the imaging device 11 are tilted by the tilting unit 12 to orient the optical axis of the zoom lens system 10 in any desired direction around the optical axis of the wide-angle lens system 8. However, the zoom lens system 10 and the imaging device 11 may be moved vertically and horizontally while keeping the optical axis of the zoom lens system 10 parallel to the optical axis of the wide-angle lens system 8 until the zoom lens system 10 and the imaging device 11 are oriented toward any desired position (x, y) in the x-y orthogonal coordinate system.

In the illustrated embodiment, the zoom lens system 10 has a zoom ratio of 10 with the focal length variable from 0.8 to 8 cm, and the close-up lens 29 with a short focal length is used to fully perform the functions of the zoom lens system 10. However, the close-up lens 29 may have a focal length of 33.3 cm, and the zoom lens system 10 may have a zoom ratio of about 6. As indicated above, a large inverted optical image is produced by a wide-angle lens system of a large aperture, and a maximum magnification ratio for an object to be imaged is determined based on a combination of such an optical image and a zoom lens system having a high magnification ratio. A close-up lens which has a suitable focal length is selected depending on the relative positional relationship between the optical image and the zoom lens system.

The monitoring camera 1 may be employed in any of various applications in which any desired area of an optical image produced by the wide-angle lens system 8 is observed through the zoom lens system 10, other than the monitoring of the throat 2 of the blast furnace. For example, the interior of the combustion chamber of a boiler, an incinerator, a heating furnace, or the like may be observed in a wide field of view, and any desired area of the entire field of view may be enlarged through a small hole defined in a hole by a combination of a wide-angle lens system and a zoom lens system which are fixedly mounted on a wall of the combustion chamber. Furthermore, not only a closed space, but also an abnormal condition in a general scene can be observed in a wide field of view, and any desired area of the entire field of view may be enlarged through a small hole defined in a wall by such an optical system combination.

## Claims

1.  A monitoring camera (1) for monitoring conditions through an opening (4) in a wall, the camera comprising a wide-angle lens system (8) for producing an optical image, a zoom lens system (10) for varying the size of the optical image produced by the wide-angle lens system (8) and an imaging device (11) for capturing the optical image produced by the zoom lens system (10), wherein the zoom lens system (10) is arranged to observe a portion of the image produced by the wide-angle lens system (8) characterised in that

    moving means (12) are provided for varying that portion of the image which is observed by the zoom lens system (10) ; said monitoring camera further comprising
    a cylindrical attachment (6) having a first end for surrounding said opening (4) and an outer sleeve (7), said wide-angle lens system (8), said zoom lens system (10) and said imaging device (11) being housed in said outer sleeve (7) , said outer sleeve (7) being fitted in a second end of said cylindrical attachment (6) opposite to said first end ,
    said cylindrical attachment (6) having a partition (21) dividing an interior space thereof into a first space defined between said first end and said partition (21) and a second space defined between said partition (21) and said outer sleeve (7) said partition (21) having a central shielding glass panel (21a) fitted therein, positioned on the optical axis of said wide-angle lens system (8) and said zoom lens system (10) ; further comprising
    an inert gas supply means (23, 24, 25, 26) for introducing and inert gas into said cylindrical attachment (6) and discharging at least part of said inert gas through said first end, said inert gas supply means (23,24,25,26) comprising means (25,26) for introducing the inert gas under a first pressure into said first space and then discharging the inert gas through said first end of the cylindrical attachment and passing the inert gas under a second, lower pressure through said second space.

2.  A monitoring camera (1) as claimed in claim 1, wherein said moving means (12) comprises means for moving said zoom lens system (10) and said imaging device (11) to orient an optical axis of said zoom lens system (10) in any direction around an optical axis of said wide-angle lens system (8).

3.  A monitoring camera (1) as claimed in claims 1 or 2, wherein said opening (4) is positioned forwardly of a front focal point ($F_1$) of said wide-angle lens system (8) within a range whose length corresponds to a minimum width of the opening (4).

4. A monitoring camera (1) as claimed in claim 3, wherein said opening (4) comprises a small hole large enough to maintain an optical path therethrough for incident light converged on said front focal point ($F_1$) of said wide-angle lens system (8).

5. A monitoring camera (1) as claimed in any preceding claim, further comprising a close-up lens (29) combined with said zoom lens system (10).

6. A monitoring camera (1) as claimed in any preceding claim, further comprising illuminating means (15) for illuminating what is to be imaged.

7. A monitoring camera (1) as claimed in any preceding claim, further comprising a shielding glass panel (21a) mounted on an end of said outer sleeve (7) near said cylindrical attachment (6), for isolating said wide-angle lens system (8), said zoom lens system (10) and said imaging device (11) from a space outside said outer sleeve (7).

8. A monitoring camera (1) as claimed in any preceding claim, wherein said wide-angle lens system (8) has an angle of view ranging from 60° to 80°.

9. A monitoring camera (1) as claimed in any preceding claim, wherein said zoom lens system (10) has a zoom ratio ranging from 4 to 15.

10. A monitoring camera (1) as claimed in any preceding claim, when in combination with a blast furnace for producing pig iron from iron ore, for observing a throat (2) of the blast furnace through an opening (4) defined in a surrounding wall (3) of the throat (2).

11. A monitoring camera (1) as claimed in any preceding claim, further comprising shutter means (28) for selectively opening and closing said opening (4), said shutter means (28) having an optical path for said wide-angle lens system (8) and said zoom lens system (10).

**Patentansprüche**

1. Überwachungskamera (1) zur Überwachung von Zuständen durch eine Öffnung (4) in einer Wand, wobei die Kamera aufweist ein Weitwinkel-Linsensystem (8) zum Erzeugen eines optischen Bildes, ein Zoom-Linsensystem (10) zum Ändern der Größe des optischen Bildes, das von dem Weitwinkel-Linsensystem (8) erzeugt wird, und eine Abbildungsvorrichtung (11) zum Einfangen des optischen Bildes, das von dem Zoom-Linsensystem (10) erzeugt wird, worin das Zoom-Linsensystem (10) angeordnet ist, einen Abschnitt des Bildes zu beobachten, das von dem Weitwinkel-Linsensystem (8) erzeugt wird, dadurch gekennzeichnet, daß

eine Bewegungseinrichtung (12) zum Verändern dieses Abschnitts des Bildes vorgesehen ist, das von dem Zoom-Linsensystem (10) beobachtet wird; wobei die Überwachungskamera weiterhin aufweist eine zylindrische Anbringung (6), die ein erstes Ende zum Umgeben der Öffnung (4) hat, und eine äußere Buchse (7), wobei das Weitwinkel-Linsensystem (8), das Zoom-Linsensystem (10) und die Abbildungsvorrichtung (11) in dieser äußeren Buchse (7) untergebracht sind und wobei die äußere Buchse (7) in einem zweiten Ende der zylindrischen Anbringung (6) entgegengesetzt zu dem ersten Ende untergebracht ist; daß die zylindrische Anbringung (6) eine Trennwand (21) hat, die ihren inneren Raum in einen ersten Raum, der zwischen dem ersten Ende und der Trennwand (21) ausgebildet ist, und in einen zweiten Raum unterteilt, der zwischen der Trennwand (21) und der äußeren Buchse (7) ausgebildet ist, wobei die Trennwand (21) eine mittige Schutzglasplatte (21a) hat, die in ihr untergebracht ist und auf der optischen Achse des Weitwinkel-Linsensystems (8) und des Zoom-Linsensystems (10) angeordnet ist; weiterhin aufweisend eine Inertgas-Zuführeinrichtung (23,24,25,26) zum Einführen eines Inertgases in die zylindrische Anbringung (6) und zum Entladen zumindest eines Teils des Inertgases durch das erste Ende, wobei die Inertgas-Zuführeinrichtung (23,24,25,26) eine Einrichtung (25,26) zum Einführen des Inertgases unter einem ersten Druck in den ersten Raum und dann zum Auslassen des Inertgases durch das erste Ende der zylindrischen Anbringung und zum Durchlassen des Inertgases unter einem zweiten, niedrigeren Druck durch den zweiten Raum aufweist.

2. Überwachungskamera (1), wie in Anspruch 1 beansprucht, worin die Bewegungseinrichtung (12) eine Einrichtung zum Bewegen des Zoom-Linsensystems (10) und der Abbildungsvorrichtung (11) aufweist, um eine optische Achse des Zoom-Linsensystems (10) in einer Richtung um eine optische Achse des Weitwinkel-Linsensystem (8) herum auszurichten.

3. Überwachungskamera (1), wie in den Ansprüchen 1 oder 2 beansprucht, worin die Öffnung (4) vorne bezüglich eines vorderen Brennpunkts ($F_1$) des Weitwinkel-Linsensystems (8) innerhalb eines Bereichs angeordnet ist, dessen Länge einer Minimalweite der Öffnung (4) entspricht.

4. Überwachungskamera (1), wie in Anspruch 3 beansprucht, worin die Öffnung (4) ein schmales Loch aufweist, das groß genug ist, um einen optischen Weg durch sie hindurch für einfallendes Licht aufrechtzuerhalten, das am vorderen Brennpunkt ($F_1$) des Weitwinkel-Linsensystems (8) konvergiert.

5. Überwachungskamera (1), wie in einem vorhergehenden Anspruch beansprucht, die weiterhin eine Nahlinse (29) aufweist, die mit dem Zoom-Linsensystem (10) kombiniert ist.

6. Überwachungskamera (1), wie in einem vorhergehenden Anspruch beansprucht, die weiterhin eine Beleuchtungseinheit (15) zum Beleuchten dessen aufweist, was abgebildet werden soll.

7. Überwachungskamera (1), wie einem der vorhergehenden Ansprüche beansprucht, die weiterhin eine Schutzglasplatte (21a), die an einem Ende der äußeren Buchse (7) neben der zylindrischen Anbringung (6) angebracht ist, zum Isolieren des Weitwinkel-Linsensystems (8), des Zoom-Linsensystems (10) und der Abbildungsvorrichtung (11) gegenüber einem Raum außerhalb der äußeren Buchse (7) aufweist.

8. Überwachungskamera (1), wie in einem der vorhergehenden Ansprüche beansprucht, worin das Weitwinkel-Linsensystem (8) einen Sichtwinkel hat, der von 60° bis 80° reicht.

9. Überwachungskamera (1), wie in einem der vorhergehenden Ansprüche beansprucht, wobei das Zoom-Linsensystem (10) ein -Zoomverhältnis hat, das von 4 bis 15 reicht.

10. Überwachungskamera (1), wie in einem der vorhergehenden Ansprüche beansprucht, wenn in Kombination mit einem Hochofen zum Erzeugen von Roheisen aus Eisenerz, zum Beobachten eines Halses (2) des Hochofens durch eine Öffnung (4), die in einer umgebenden Wand (3) des Halses (2) ausgebildet ist.

11. Überwachungskamera (1), wie in einem vorhergehenden Anspruch beansprucht, die weiterhin aufweist eine Verschlußeinrichtung (28) zum Selektiven Öffnung und Verschließen der Öffnung (4), wobei die Verschlußeinrichtung (28) einen optischen Weg für das Weitwinkel-Linsensystem (8) und das Zoom-Linsensystem (10) hat.

**Revendications**

1. Caméra de surveillance (1) destinée à la surveillance de conditions à travers une ouverture (4) formée dans un mur, la caméra comprenant un objectif grand-angle (8) pour produire une image optique, un objectif à distance focale variable (10) pour faire varier les dimensions de l'image optique produite par l'objectif grand-angle (8) et un capteur d'image (11) pour capter l'image optique produite par l'objectif à distance focale variable (10), l'objectif à distance focale variable (10) étant conçu pour observer une partie de l'image produite par l'objectif grand-angle (8) caractérisé en ce qu'un moyen de déplacement (12) est présent pour faire varier la partie de l'image qui et observée par l'objectif à distance focale variable (10), ladite caméra de surveillance comprenant, e outre:

    une pièce de fixation cylindrique (6) comportant une première extrémité destinée à entourer ladite ouverture (4) et un manchon extérieur (7), ledit objectif grand-angle (8), ledit objectif à distance focale variable (10) et ledit capteur d'image (11) étant logés dans ledit manchon extérieur (7), ledit manchon extérieur (7) étant emboîté dans la deuxième extrémité de ladite pièce de fixation cylindrique (6) à l'opposé de ladite première extrémité;
    ladite pièce de fixation cylindrique (6) comportant une cloison (21) divisant un espace intérieur de cette pièce en un premier espace défini entre ladite première extrémité et ladite cloison (21) et un deuxième espace défini entre ladite cloison (21) et ledit manchon extérieur (7), ladite cloison (21) comportant un panneau central de protection (21a) en verre qui y est monté en étant positionné sur l'axe optique dudit objectif grand-angle (8) et dudit objectif à distance focale variable (10);
    comprenant, en outre, des moyens (23, 24, 25, 26) de fourniture de gaz inerte pour introduire un gaz inerte dans ladite pièce de fixation cylindrique (6) et décharger au moins une partie dudit gaz inerte à travers ladite première extrémité , lesdits moyens (23, 24, 25, 26) de fourniture de gaz inerte comprenant des moyens (25, 26) destinés à introduire le gaz inerte sous une première pression dans ledit premier espace et ensuite décharger le gaz inerte à travers ladite première extrémité de la pièce de fixation cylindrique et faire passer le gaz inerte sous une deuxième pression inférieure à travers ledit deuxième espace.

2. Caméra de surveillance (1) selon la revendication 1, dans laquelle ledit moyen de déplacement (12) comprend un moyen pour déplacer ledit objectif à distance focale variable (10) et ledit capteur d'image (11) afin d'orienter l'axe optique dudit objectif à distance focale variable (10) dans une direction quelconque autour d'un axe optique dudit objectif grand-angle (8).

3. Caméra de surveillance (1) selon les revendications 1 ou 2, dans laquelle ladite ouverture (4) est positionnée en avant d'un point focal avant ($F_1$) dudit objectif grand-angle (8) dans les limites d'une plage dont la longueur correspond à une largeur minimum de l'ouverture (4).

4. Caméra de surveillance (1) selon la revendication 3, dans laquelle ladite ouverture (4) comprend un petit trou suffisamment large pour maintenir un trajet optique traversant pour la lumière incidente convergeant sur ledit point focal avant ($F_1$) dudit objectif grand-angle (8).

5. Caméra de surveillance (1) selon l'une quelconque des revendications précédentes, comprenant, en outre, un objectif pour gros plan (29) combiné avec ledit objectif à distance focale variable (10).

6. Caméra de surveillance (1) selon l'une quelconque des revendications précédentes, comprenant, en outre, un moyen d'éclairage (15) pour éclairer l'objet dont l'image est formé.

7. Caméra de surveillance (1) selon l'une quelconque des revendications précédentes, comprenant, en outre, un panneau de protection (21a) en verre, monté sur une extrémité dudit manchon extérieur (7) prés de ladite pièce de fixation cylindrique (6) pour isoler ledit objectif grand-angle (8), ledit objectif à distance focale variable (10) et ledit capteur d'image (11) vis-à-vis de l'espace situé à l'extérieur dudit manchon extérieur (7).

8. Caméra de surveillance (1) selon l'une quelconque des revendications précédentes, dans lequel ledit objectif grand-angle (8) possède un angle visuel compris entre 60° et 80°.

9. Caméra de surveillance (1) selon l'une quelconque des revendications précédentes, dans laquelle ledit objectif à distance focale variable (10) présente un rapport d'agrandissement compris entre 4 et 15.

10. Caméra de surveillance (1) selon l'une quelconque des revendications précédentes, en combinaison avec un haut-fourneau de production de gueuses de fonte à partir de minerai de fer, pour observer le gueulard (2) du haut-fourneau à travers une ouverture (4) formée dans un mur environnant (3) du gueulard (2).

11. Caméra de surveillance (1) selon l'une quelconque des revendications précédentes, comprenant, en outre, un obturateur (28) destiné à ouvrir et fermer sélectivement ladite ouverture (4), ledit obturateur (28) présentant un trajet optique pour ledit objectif grand-angle (8) et ledit objectif à distance focale variable (10).

# FIG. 1

EP 0 696 751 B1

# FIG. 2

EP 0 696 751 B1

FIG. 3

FIG. 4

FIG. 5